# FASCICULE DE BREVET EUROPEEN

(11) **EP 0 519 816 B1**
(45) Date de publication et mention de la délivrance du brevet: **09.08.1995**
(21) Numéro de dépôt: 92401686.8
(22) Date de dépôt: 17.06.1992
(51) Int. Cl.: F16D 1/02, G01P 1/04

(54) **Perfectionnements aux dispositifs comprenant une prise de mouvement à rotation, notamment pour capteur de vitesse de véhicule automobile**
Verbesserungen einer Kupplungsvorrichtung, insbesondere zum Gebrauch bei Geschwindigkeitssensoren
Improvements to coupling devices, especially for use in vehicle speed sensors

(30) Priorité: 18.06.1991 FR 9107438
(43) Date de publication de la demande: 23.12.1992
(73) Titulaire: JAEGER, F-92303 Levallois-Perret (FR)
(72) Inventeur: Bernard, André, F-94500 Champigny sur Marne (FR); Seby, André, F-92370 Chaville (FR)
(74) Mandataire: Martin, Jean-Jacques

(56) Documents cités:
- FR-A- 2 516 615
- FR-A- 2 600 133
- FR-A- 2 653 222

## Description

La présente invention concerne le domaine des dispositifs comprenant une prise de mouvement à rotation.

La présente invention s'applique notamment, mais non exclusivement, aux capteurs de vitesse de véhicule automobile.

On a proposé de nombreux systèmes conçus pour transmettre un mouvement de rotation à partir de la boîte de vitesse, jusqu'au tableau de bord d'un véhicule automobile, afin d'actionner les différents indicateurs du tableau de bord utilisant les informations mécaniques de vitesse.

On a également proposé de nombreux systèmes comprenant un capteur électrique de vitesse aptes à générer un signal électrique représentatif de la vitesse, par exemple pour servir de signal d'entrée à un calculateur de bord ou à un régulateur de vitesse. Ces capteurs comprennent un moyen transmetteur de mouvement formé le plus souvent d'un arbre conçu pour être accouplé à une prise de mouvement provenant de la boîte de vitesse et un moyen transducteur générant un signal électrique représentatif de la vitesse de rotation de l'arbre. Ce moyen transducteur est le plus souvent formé d'une roue dentée associée à un système optique ou d'un aimant associé à un élément détecteur tel qu'une sonde à effet Hall, une bobine, ou un interrupteur à lames souples. Le cas échéant, l'arbre peut se prolonger par un élément de transmission de mouvement raccordé au tableau de bord.

De tels systèmes connus sont décrits par exemple dans les documents DE-A-3001823, FR-A-2242801, FR-A-2343254, US-A-4047106, FR-A-1104346, US-A-4646042, FR-A-2577678 et FR-A-1446743.

Dans tous ces dispositifs, les prises de mouvement comprennent un arbre mâle métallique de section généralement carrée engagé dans une pièce femelle complémentaire.

Pour tenter de limiter les jeux, les vibrations et le bruit, la Demanderesse à proposer dans sa demande de brevet français FR-A-2653222 de surmouler un manchon de matériau thermoplastique dans le canal de la pièce femelle. L'arbre mâle est alors engagé dans le manchon ainsi formé.

La disposition proposée dans ce document FR-A-2653222 présente un progrès important par rapport à la technique antérieure et a rendu de grands services. Elle ne donne cependant pas totalement satisfaction.

En particulier, la Demanderesse a constaté que cette disposition était difficilement exploitable au niveau des prises de mouvement raccordées directement sur la boîte de vitesse. A ce niveau, la température dépasse souvent 140°C, et à une telle température, les matériaux thermoplastiques actuels fluent et n'offrent pas une tenue mécanique suffisante pour transmettre un couple de rotation.

La Demanderesse a également proposé dans sa demande de brevet français déposée le 14 Décembre 1990 sous le n° 90 15713, un dispositif comprenant une prise de mouvement à rotation formée d'un premier élément mâle de section non circulaire de révolution engagé dans un second élément femelle complémentaire, dans lequel au moins l'un des éléments comprend au moins deux parties juxtaposées axialement : une première partie en métal de contour non circulaire de révolution destinée à transmettre un couple de rotation, et une seconde partie en matériau souple élastique destinée à rattraper les jeux éventuels entre les deux éléments et qui forme au moins légèrement saillie par rapport à la première partie.

Cette seconde proposition a également rendu de grands services. Elle ne donne cependant pas non plus totalement satisfaction.

En effet, elle ne permet pas toujours d'éliminer totalement le jeu entre l'élément mâle et l'élément femelle. Le débattement entre les deux éléments, qu'autorise cette seconde proposition, peut de ce fait générer parfois un signal de sortie parasite.

Ainsi par exemple, dans le cas où le transducteur comprend un aimant multipolaire à grand nombre de pôles et une sonde à effet Hall, le débattement entre l'élément mâle et l'élément femelle peut générer un signal parasite en sortie de la sonde à effet Hall, y compris à l'arrêt du véhicule, en raison des vibrations du moteur.

La présente intention a pour but de proposer un nouveau dispositif comprenant une prise de mouvement qui élimine les inconvénients de la technique antérieure.

Ce but est atteint selon la présente invention grâce à un dispositif comprenant une prise de mouvement à rotation formée d'un premier élément mâle engagé dans un second élément femelle généralement complémentaire dans lequel les deux éléments comprennent des structures d'entraînement, non circulaires de révolution autour d'un axe longitudinal commun et conçues pour venir en contact mutuel afin de transmettre un couple de rotation entre ces éléments, l'un au moins des éléments comprenant une première structure en relief, généralement longitudinale, dont un flanc au moins est oblique par rapport à l'axe longitudinal commun des deux éléments et est conçu pour venir reposer contre une seconde structure en relief prévue sur l'autre élément, caractérisé par le fait que les structures en relief sont conformées de façon à solliciter les structures d'entraînement, prévues respectivement sur ces deux éléments, en contact mutuel et que l'une des structures en relief de sollicitation est susceptible de déformation élastique lorsque l'élément mâle est introduit dans l'élément femelle.

Selon une autre caractéristique avantageuse de la présente invention, la première structure en relief est prévue sur le premier élément mâle.

Selon une autre caractéristique avantageuse de la présente invention, la première structure en relief comprend une nervure généralement longitudinale en saillie sur l'élément mâle.

Selon une autre caractéristique avantageuse de la présente invention, il est prévu deux premières structures diamétralement opposées sur l'un des deux éléments.

Selon une autre caractéristique avantageuse de la présente invention, la première structure est formée en matière plastique.

Selon une autre caractéristique avantageuse de la présente invention, la première structure est formée de matière plastique surmoulée sur le premier élément mâle en métal définissant les structures d'entraînement.

Le document FR-A-2600133 décrit un dispositif cannelé de liaison transmetteur de couple conforme au préambule de la revendication 1. Ce document enseigne un arbre qui comporte des dents dont les flancs convergent de façon symétrique à partir du pied de chaque dent. Un tel système permet de centrer les dents dans des rainures associées, mais ne permet pas de solliciter l'arbre dans le sens périphérique, comme c'est le cas selon l'invention. Par ailleurs, ce document n'enseigne pas des moyens d'entraînement et des moyens de sollicitation séparés.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue schématique en coupe axiale d'un capteur électrique de vitesse incorporant l'enseignement de la présente invention,
- la figure 2 représente une vue axiale d'un élément femelle conforme à la présente invention,
- la figure 3 représente une vue latérale partielle d'un élément mâle conforme à la présente invention, avant surmoulage d'une partie en matière plastique formant les structures de sollicitation,
- la figure 4 représente une vue latérale similaire du même élément mâle après réalisation du surmoulage en matière plastique,
- la figure 5 représente une autre vue latérale du même élément mâle selon une vue orthogonale aux figures 3 et 4,
- la figure 6 représente une vue axiale du même élément mâle,
- la figure 7 représente une vue axiale d'un élément femelle conforme à un second mode de réalisation de la présente invention,
- la figure 8 représente une vue latérale similaire à la figure 4 de l'élément mâle correspondant au second mode de réalisation de la présente invention, et
- la figure 9 représente une vue axiale du même élément mâle conforme au second mode de réalisation de la présente invention.

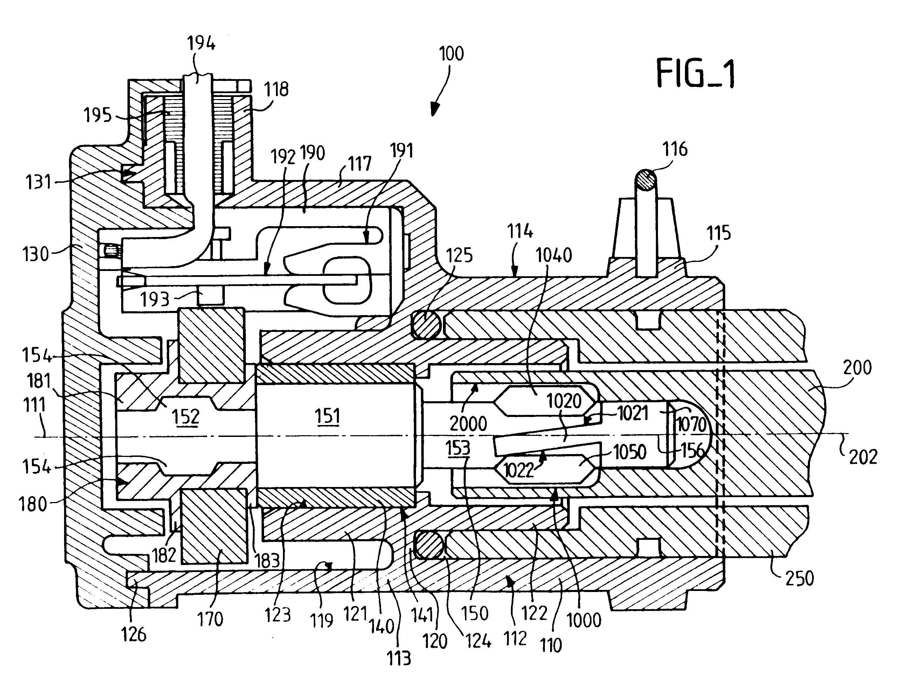

On aperçoit sur la figure 1 annexée, un capteur électrique de vitesse 100 conçu pour être fixé sur l'extrémité d'un arbre d'entraînement 200 lié à une sortie de boîte de vitesse.

Le capteur 100 comprend un boîtier 110 qui loge un arbre 150.

Le boîtier 110 peut faire l'objet de nombreux modes de réalisation.

Il est de préférence réalisé par moulage de matière plastique. De préférence, le boîtier 110 est formé de différentes coquilles ou éléments assemblés par tout moyen classique approprié, tel que par exemple par encliquetage ou soudure. Le boîtier 110 est généralement centré sur un axe 111.

Selon le mode de réalisation représenté sur les figures annexées, le boîtier 110 est formé par assemblage de deux parties 112, 130. La partie 112 comprend une paroi externe 113 généralement de révolution autour de l'axe 111. La surface externe 114 de la paroi 113 est munie de structures 115 conçues pour assurer la fixation du boîtier 110 sur tout support approprié et à l'aide de tout moyen approprié, par exemple à l'aide d'une agrafe 116 ou tout moyen équivalent.

La paroi externe 113 définit un logement excentré 117 qui loge le transducteur comme cela sera décrit par la suite et définit de préférence un corps de connecteur 118 ou passe-fil.

Sur sa surface interne 119 et sensiblement à mi-longueur, la paroi externe 113 est munie d'un anneau 120 qui porte d'un côté un fourreau cylindrique 121 et de l'autre un manchon cylindrique 122.

La surface interne 123 du fourreau 121 est cylindrique de révolution autour de l'axe 111. Elle sert de palier de guidage à rotation pour l'arbre 150. Plus précisément, de préférence, la surface interne 123 du fourreau 121 est complémentaire de la surface externe 141 d'une bague intermédiaire 140, par exemple en bronze, montée sur l'arbre 150. La bague 140 peut, le cas échéant, former un palier auto-lubrifiant.

Ainsi l'arbre 150 est guidé à rotation autour de l'axe 111 par un palier 123 unique, cylindrique de révolution autour de l'axe 111 et formé directement sur le boîtier 110.

Le guidage de l'arbre 150 par un palier unique 123 permet un guidage précis et fiable de cet arbre 150, et par conséquent un positionnement précis d'un aimant annulaire 170 porté par l'arbre 150, d'où une information précise et fiable en sortie du capteur.

Le manchon cylindrique 122 coopère avec la paroi externe 113 pour définir un canal annulaire 124 qui reçoit l'extrémité d'une gaine 250 logeant l'arbre 200.

L'arbre 200 et la gaine 250 peuvent faire l'objet de nombreux modes de réalisation.

Selon un premier mode de réalisation l'arbre 200 peut être rigide à la flexion. Dans ce cas, la gaine 250 peut également être rigide.

Toutefois, selon une seconde variante préférentiel, de l'arbre 200 est un arbre flexible. La gaine 250 peut alors être formée par exemple d'une gaine à spires jointives revêtue d'un revêtement de matière plastique, tel qu'un revêtement en polypropylène.

L'arbre 200 est de préférence réalisé en acier.

Selon une autre variante, la partie 112 du boîtier peut être surmoulée sur l'extrémité de la gaine 250 pour garantir une étanchéité parfaite à ce niveau.

On notera que de préférence un joint torique 125 est engagé dans le fond du canal annulaire 124 pour améliorer l'étanchéité du dispositif.

La seconde partie 130 du boîtier 110 forme un couvercle qui obture l'une des extrémités axiales de la paroi 113. Ce couvercle 130 est formé généralement d'un disque plan perpendiculaire à l'axe 111. Le couvercle 130 est fixé de façon étanche sur l'extrémité axiale de la paroi 113. Le couvercle 130 peut être fixé par tout moyen classique approprié sur la partie 113, par exemple par collage, soudure, vissage ou tout moyen équivalent. De préférence, le couvercle 130 est engagé sur des structures complémentaires formées sur la paroi 113 pour parfaire l'étanchéité. Selon le mode de réalisation particulier mais non limitatif représenté sur la figure 1, le couvercle 130 est ainsi muni d'une gorge annulaire 131 centrée sur l'axe 111 et recevant une nervure annulaire 126 formée sur l'extrémité axiale de la partie 113 de boîtier.

L'arbre 150 est formé de préférence de métal, très avantageusement d'acier.

Il comprend trois parties juxtaposées axialement : une partie centrale 151, une partie interne 152 placée d'un côté de la partie centrale 151 et une partie externe 153 placée de l'autre côté de la partie centrale 151.

La partie centrale 151 est cylindrique de révolution autour de l'axe 111. Elle reçoit la bague 140 précitée.

La partie interne 152 porte l'aimant 170 précité. Il s'agit de préférence d'un aimant multipolaire a aimantation radiale. Les pôles de l'aimant sont équi-répartis autour de l'axe 111. A titre d'exemple non limitatif, l'aimant 170 peut comprendre seize pôles équi-répartis autour de l'axe 111.

De façon connue en soi, l'aimant 170 peut être du type en ferrite de baryum ou strontium.

Plus précisément encore, de préférence, l'aimant 170 est porté sur l'arbre 150 par un corps intermédiaire en matière plastique 180 surmoulé sur la partie interne 152 de l'arbre 150. Le corps surmoulé 180 est formé de préférence en polyamide 6.6. Plus précisément encore, la partie interne 152 de l'arbre 150 qui reçoit le corps surmoulé 180 est de préférence munie de nervures en saillie 154, non symétriques de révolution autour de l'axe 111 et couvrant seulement une portion axiale de la partie interne 152 pour définir une liaison ferme, tant à translation selon l'axe 111, qu'à rotation autour de celui-ci, entre l'arbre 150 et le corps surmoulé 180.

Le corps surmoulé 180 comprend de préférence un fût 181 généralement cylindrique recouvrant la partie interne 152 de l'arbre 150, et deux flasques annulaires 182, 183 formés respectivement de part et d'autre de l'aimant 170 et servant de butées axiales à celui-ci.

On aperçoit au niveau du logement 117 des lames de contact 190 en matériau électriquement conducteur, qui s'étendent sensiblement parallèlement à l'axe 111 et possèdent chacune une partie formant fiche 191 apte à recevoir une plaquette de circuit-imprimé 192 servant de support à une sonde à effet Hall 193 placée radialement à l'extérieur de l'aimant 170. La plaquette 192 s'étend parallèlement à l'axe 111.

Les fiches 190 peuvent être accessibles au niveau du corps de connecteur 118 ou être reliées à un câble de sortie 194 traversant un passe-fil 195 placé dans l'élément de boîtier 118.

Selon le mode de réalisation représenté sur la figure 1, la partie externe 153 de l'arbre 150 est munie de l'élément mâle 1000 engagé dans un élément femelle 2000 prévu à l'extrémité de l'arbre 200.

Cependant, une disposition inverse peut être retenue en ce sens que l'élément mâle 1000 peut être prévu à l'extrémité de l'arbre 200, tandis que l'élément femelle 2000 serait prévu à l'extrémité de l'arbre 150.

L'arbre 150 est centré sur un axe 156 coaxial à l'utilisation avec l'axe 111 du boîtier. De même, l'arbre 200 est centré sur un axe 202 coaxial à l'utilisation de l'axe 156.

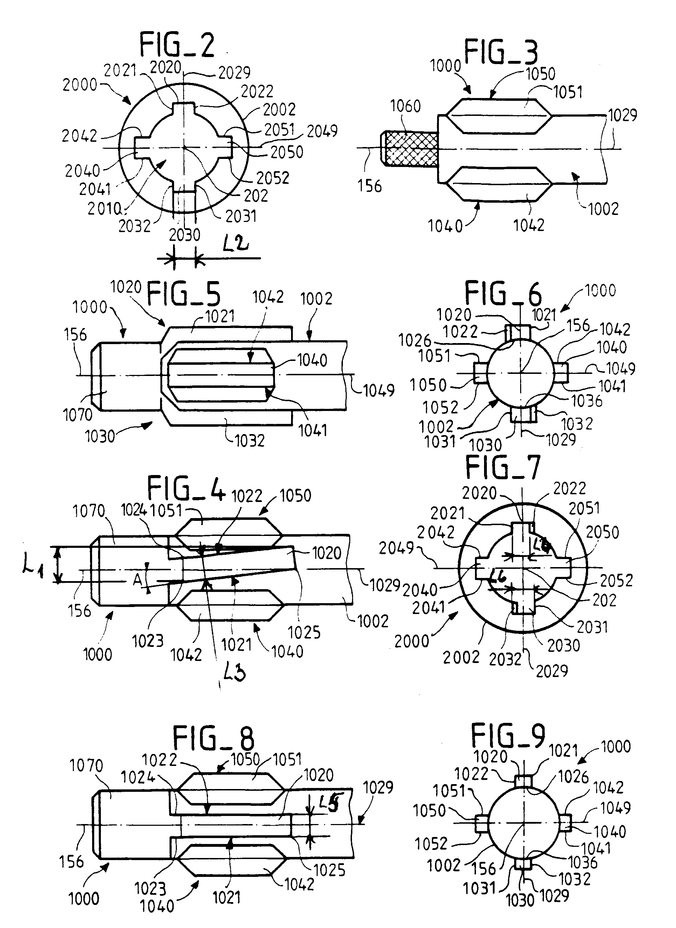

On va maintenant décrire la structure de l'élément mâle 1000 et de l'élément femelle 2000 représentés sur les figures 2 à 6.

La section de l'élément femelle 2000 est représentée sur la figure 2. Cet élément femelle 2000 est avantageusement réalisée en métal.

La surface externe 2002 de cet élément est cylindrique de révolution autour de l'axe 202. L'élément femelle 2000 possède un alésage borgne 2010. Cet alésage borgne 2010 est généralement cylindrique de révolution autour de l'axe 202. Il possède toutefois de plus, deux paires d'excroissances ou rainures longitudinales rectilignes 2020, 2030 d'une part, 2040, 2050 d'autre part.

Les deux rainures 2020, 2030 sont diamétralement opposées entre elles par rapport à l'axe 202. De même les deux rainures 2040, 2050 sont diamétralement opposées entre elles par rapport à l'axe 202 et disposées sensiblement à 90° des deux rainures précitées 2020, 2030.

Les deux rainures 2040, 2050 servent de structures d'entraînement, tandis que les deux rainures 2020, 2030 servent de structures de sollicitation.

Les deux rainures 2020, 2030 possèdent des flancs 2021, 2022 ; 2031, 2032,, généralement plans, parallèles entre eux, sensiblement orthogonaux à la surface 2002 et symétriques d'un plan 2029 passant par l'axe 202. Les flancs 2021, 2032 sont ainsi coplanaires. De même, les flancs 2022 et 2031 sont coplanaires.

De façon similaire, les deux rainures 2040, 2050 servant de structures d'entraînement possèdent des flancs 2041, 2042, 5051, 2052, généralement plans, parallèles entre eux sensiblement orthogonaux à la surface 2002 et symétriques d'un plan 2049 passant par l'axe 202. Le plan 2049 est orthogonal au plan 2029. Ainsi, les flancs 2041 et 2052 sont coplanaires entre eux et de même les flancs 2042 et 2051 sont coplanaires.

L'élément mâle 1000 est représenté sur les figures 3 à 6.

L'élément mâle 1000 possède une enveloppe externe 1002 cylindrique de révolution autour de l'axe 156. Par ailleurs, l'élément mâle 1000 possède en saillie sur l'enveloppe 1002 deux séries de nervures 1020, 1030 d'une part, et 1040, 1050 d'autre part, généralement rectilignes et longitudinales.

Les deux nervures 1020, 1030, servent de structures de sollicitation. Elles sont diamétralement opposées entre elles par rapport à l'axe 202. De même, les deux nervures 1040, 1050 servent de structure d'entraînement et sont diamétralement opposées entre elles par rapport à l'axe 156, en étant disposées sensiblement à 90° des nervures de sollicitation 1020, 1030.

Les deux nervures d'entraînement 1040, 1050, sont longitudinales, c'est-à-dire qu'elles s'étendent sensiblement parallèlement à l'axe 156. Elles possèdent chacune deux flancs 1040, 1041 et 1050, 1051, plans, parallèles entre eux, sensiblement orthogonaux à la surface 1002 et symétriques par rapport à un plan 1049 passant par l'axe 156. Ainsi les flancs 1041 et 1052 sont coplanaires, tandis que les flancs 1042 et 1051 sont coplanaire entre eux. Les deux nervures 1040, 1050 peuvent être formées par matriçage de l'arbre 150. Ces deux nervures d'entraînement 1040, 1050, sont donc avantageusement réalisées en métal. La largeur des nervures 1040, 1050, c'est-à-dire la distance séparant les flancs 1040 et 1041 d'une part, et les flancs 1050 et 1051 d'autre part, est inférieure à la largeur des rainures 2040, 2050, associées destinées à les recevoir. Ainsi, lorsque les nervures 1040, 1050 sont placées respectivement dans les rainures 2040, 2050, un couple d'entraînement à rotation peut être transmis entre les deux éléments en prise.

Les nervures de sollicitation 1020, 1030 sont également généralement longitudinales, c'est-à-dire généralement parallèles à l'axe 156. Elles sont délimitées chacune par deux flancs 1021, 1022 et 1031, 1032, plans, parallèles entre eux, sensiblement orthogonaux à la surface 1002, mais obliques sur l'axe 156. Plus précisément, les flancs 1021, 1022 et 1031, 1032 sont inclinés sur un plan 1029 passant par l'axe 156 et orthogonal au plan 1049. L'inclinaison des flancs 1021 et 1022 par rapport au plan 1029 est égale, mais de sens opposé, à l'inclinaison des flancs 1031 et 1032 par rapport au même plan 1029. L'inclinaison A entre les flancs 1021, 1022, 1031, 1032 et le plan 1029 est de préférence comprise entre 4 à 20°, typiquement de l'ordre de 8°. Les nervures de sollicitation 1020, 1030 peuvent être assimiliées à des filets de pas très important.

La largeur des nervures 1020, 1030, c'est-à-dire la distance séparant les flancs 1021, 1022 d'une part, et les flancs 1031, 1032 d'autre part, est inférieure à la largeur des rainures 2020, 2030, associées, destinées à les recevoir.

Les bords axialement externes 1023, 1024, des flancs 1021, 1022, et les bords axialement externes correspondant des flancs 1031, 1032, c'est-à-dire les bords d'engagement des nervures 1020, 1030, dans les rainures 2020 et 2030, sont symétriques par rapport au plan 1029. En revanche le bord axialement interne 1025 du flanc 1021 et le bord axialement interne correspondant du flanc 1021 sont situés sensiblement sur le plan 1029.

Les nervures 1020, 1030 sont de préférence formées par surmoulage de matière plastique sur l'extrémité de l'arbre 150. La matière utilisée est de préférence du polyamide 6.6 non chargé.

Pour assurer une liaison solide entre la matière plastique surmoulée et l'arbre 150, il est de préférence prévu sur l'extrémité de cette dernier une structure de retenue. Celle-ci peut être formée par exemple par un fût canelé ou moleté 1060 usiné à l'extrémité de l'arbre 150.

Ce fût 1060 apparaît à l'extrémité de l'arbre 150 sur la figure 3. On notera à l'examen comparé des figures 3 et 4, que le corps en matière plastique surmoulé sur l'extrémité de l'arbre métal 150 comprend une masse 1070 cylindrique de révolution autour de l'axe 156 surmoulée sur le fût 1060 et prolongée vers la partie centrale 151 de l'arbre par les deux nervures ou languettes 1020, 1030 précitées. Les nervures 1020, 1030 sont ainsi placées entre les nervures d'entraînement 1040, 1050. Les nervures de sollicitation 1020, 1030 sont susceptibles de déformation élastique lorsque l'élément mâle 1000 est introduit dans l'élément femelle 2000.

De préférence, les surfaces radialement internes 1026, 1036 des nervures 1020, 1030, ne sont pas liées à la surface externe 1002 de l'arbre métallique 150, pour faciliter ces déformations élastiques.

Plus précisément encore, les nervures de sollicitation 1020, 1030 sont inclinées, en éloignement de l'extrémité de l'élément mâle 1000, vers les flancs d'entraînement 1041, 1051 des nervures 1040, 1050 destinés à venir en contact avec les surfaces homologues 2041, 2051 des rainures 2040, 2050 lors de l'application d'un couple au câble 200.

Ainsi, lors de l'engagement de l'élément 1000 représenté sur les figures 3 à 6 dans l'élément femelle 2000 représenté sur la figure 2, les flancs 1022, 1032 des nervures 1020 et 1030 viennent reposer contre les flancs 2022 et 2032 des rainures 2020 et 2030. De ce fait, les nervures de sollicitation 1020, 1030 exercent sur l'élément mâle 1000 un couple de rotation dans le sens contraire des aiguilles d'une montre en référence à la figure 2. Ce couple de rotation tend à porter en contact les surfaces d'entraînement respectivement associées 1041 et 2041 d'une part, 1051 et 2051 d'autre part.

Les structures de sollicitation 1020 et 1030 suppriment ainsi tout jeu entre l'élément mâle 1000 et l'élément femelle 2000.

Bien entendu la présente invention n'est pas limitée au mode de réalisation particulier qui vient d'être décrit mais s'étend à toutes variantes dans les limites des revendications.

Par exemple, le nombre de nervures d'entraînement 1040, 1050 et/ou le nombre de nervures de sollicitation 1020, 1030 peut être différent de deux, égal à un par exemple ou supérieur à deux.

Par ailleurs, les flancs 1021, 1022, 1031, 1032, 1041, 1042, 1051, 1052 et 2021, 2022, 2031, 2032, 2041, 2042, 2051, 2052 peuvent ne pas être plans mais légèrement incurvés. Ils peuvent aussi ne pas être rigoureusement parallèles entre eux, mais par exemple converger légèrement en éloignement des axes respectifs 156 et 202.

Selon une caractéristique avantageuse de la présente invention, l'encombrement L1 (voir figure 4) de chaque nervure 1020, 1030, ayant un flanc oblique prévu sur l'élément mâle 1000, considéré en projection droite sur un plan perpendiculaire à l'axe 1049 du dispositif, est supérieur à l'ouverture correspondante L2 (voir figure 2) de chaque rainure associée 2020, 2030, prévu sur l'élément femelle 2000 tandis que la largeur L3 de chaque nervure considérée perpendiculairement à ses flancs est inférieure à l'ouverture L2 de chaque rainure. Grâce à cette caractéristique on garantit une mise sous tension de chaque nervure 1020, 1030 lors de l'engagement dans une rainure 2020, 2030.

Selon une autre variante représentée sur les figures 7, 8 et 9, les structures obliques de sollicitation sont prévues sur l'élément femelle 2000 et non pas sur l'élément mâle 1000.

On notera en effet à l'examen des figures 8 et 9, que les flancs 1021, 1022, 1031 et 1032 des nervures de sollicitation 1020, 1030 sont alors plans, parallèles entre eux, et symétriques par rapport au plan 1029 passant par l'axe 156.

De même, les flancs 1041, 1042, 1051 et 1052 des nervures d'entraînement 1040, 1050 sont plans, parallèles entre eux et symétriques par rapport au plan 1049 passant par l'axe 156.

Les flancs 2041, 2042, 2051 et 2052 des rainures d'entraînement 2040, 2050 sont également plans, parallèles entre eux et symétriques par rapport au plan 2049 passant par l'axe 202. En revanche, les flancs 2022 et 2032 des rainures de sollicitation 2020 et 2030 ne sont plus symétriques par rapport au plan 2029 passant par l'axe 202, mais inclinés par rapport à ce plan 2029 d'un angle de préférence compris entre 4 à 20°, typiquement de l'ordre de 8°. Ainsi, lorsque les nervures de sollicitation 1020, 1030 sont portées en contact des flancs 2022 et 2032 des rainures 2020, 2030 un couple de rotation est appliqué à l'élément mâle 1000 pour porter en contact mutuel, les flancs d'entraînement 1041 et 2041 d'une part, 1051 et 2051 d'autre part.

Dans ce cas de préférence, l'ouverture L4 (voir figure 7) entre les deux flancs de chaque rainure 2020, 2030, prévue sur l'élément femelle 2000, considérée en projection droite sur un plan perpendiculaire à l'axe 1049 du dispositif est inférieur à la largeur correspondante L5 (voir figure 8) de chaque nervure associée 1020, 1030, prévue sur l'élément mâle 1000 tandis que la largeur L5 de chaque nervure est inférieure à la largeur L6 de chaque rainure 2020, 2030, considérée perpendiculairement à ses flancs obliques. Grâce à cette disposition, on garantit là encore une mise sous tension de chaque nervure 1020, 1030, lors de l'engagement dans une rainure associée 2020, 2030.

La prise de mouvement proposée dans le cadre de la présente invention, peut faire l'objet de nombreuses applications. Selon la représentation donnée sur les figures annexées, elle est utilisée pour raccorder un capteur de vitesse à un arbre de sortie de la boîte de vitesse d'un véhicule automobile. Cependant, selon d'autres applications, la prise de mouvement proposée dans le cadre de la présente invention, peut être utilisée pour raccorder la sortie d'un capteur de vitesse à un arbre flexible dirigé vers le tableau de bord, à raccorder un arbre flexible à un indicateur, ou encore à raccorder un câble flexible à un arbre de sortie de la boîte de vitesse.

Bien entendu la présente invention n'est pas limitée aux géométries particulières d'entraînement représentées sur les figures annexées.

Par ailleurs, le transducteur électrique formé d'un aimant annulaire et d'une sonde à effet Hall selon la description qui précède peut être remplacé par tout moyen équivalent, par exemple une roue dentée associée à un système optique, ou un aimant associé à une bobine ou un interrupteur à lame souple.

## Revendications

1. Dispositif comprenant une prise de mouvement à rotation formé d'un premier élément mâle (1000) engagé dans un second élément femelle (2000) généralement complémentaire, dans lequel les deux éléments (1000, 2000) comprennent des structures d'entraînement (1040, 1050, 2040, 2050) non circulaires de révolution autour d'un axe longitudinal commun (156, 202) et conçues pour venir en contact mutuel afin de transmettre un couple de rotation entre ces éléments, l'un au moins des éléments (1000, 2000) comprenant une première structure en relief (1020, 1030) généralement longitudinale, dont un flanc au moins est oblique par rapport à l'axe longitudinal commun (156) des deux éléments et est conçu pour venir reposer contre une seconde structure (2020, 2030) en relief prévue sur l'autre élément (2000) caractérisé par le fait que les structures en relief (1020, 1030 ; 2020, 2030) sont conformées de façon à solliciter les structures d'entraînement (1040, 1050, 2040, 2050) prévues respectivement sur ces deux éléments, en contact mutuel, et que l'une des structures en relief de sollicitation (1020, 1030 ; 2020, 2030) est susceptible de déformation élastique lorsque l'élément mâle (1000) est introduit dans l'élément femelle (2000).

2. Dispositif selon la revendication 1, caractérisé par le fait que la première structure en relief (1020, 1030) est prévue sur le premier élément mâle (1000).

3. Dispositif selon l'une des revendications 1 ou 2, caractérisé par le fait que la première structure en relief (1020, 1030) est formée d'au moins une nervure généralement longitudinale en saillie sur l'élément mâle (1000).

4. Dispositif selon la revendication 3, caractérisé par le fait que la nervure (1020, 1030) formant la première structure en relief possède deux flancs (1021, 1022, 1031, 1032) parallèles entre eux et obliques par rapport à l'axe longitudinal commun (156) des deux éléments.

5. Dispositif selon l'une des revendications 1 à 4, caractérisé par le fait qu'il est prévu deux premières structures (1020, 1030) diamétralement opposées sur l'un des deux éléments (1000, 2000).

6. Dispositif selon l'une des revendications 1 à 5, caractérisé par le fait que la seconde structure (2020, 2030) est formée d'au moins une rainure longitudinale parallèle à l'axe longitudinal commun des deux éléments sur l'élément femelle (2000).

7. Dispositif selon l'une des revendications 1 à 6, caractérisé par le fait que la première structure (1020, 1030) est formée en matière plastique.

8. Dispositif selon la revendication 7, caractérisé par le fait que la matière plastique est un polyamide 6.6.

9. Dispositif selon l'une des revendications 7 ou 8, caractérisé par le fait que la matière plastique est surmoulée sur l'élément mâle (1000).

10. Dispositif selon l'une des revendications 7 à 9, caractérisé par le fait que l'élément mâle est pourvu d'une structure de retenue (1060) recevant le surmoulage de matière plastique, formée de préférence d'un fût moleté.

11. Dispositif selon la revendication 10, caractérisé par le fait que l'élément mâle est formé d'un arbre métallique recevant un corps surmoulé de matière plastique qui possède au moins une nervure (1020, 1030) susceptible de déplacement par rappport à l'arbre et qui constitue la première structure en relief.

12. Dispositif selon l'une des revendications 1 à 11, caractérisé par le fait que l'élément femelle (2000) comprend un alésage borgne (2010) muni de deux paires de rainures (2020, 2030, 2040, 2050) diamétralement opposées deux à deux.

13. Dispositif selon l'une des revendications 1 à 12, caractérisé par le fait que les structures d'entraînement (1040, 1050) prévues sur l'élément mâle (1000) sont formées par matriçage.

14. Dispositif selon l'une des revendications 1 à 13, caractérisé que les structures d'entraînement (1040, 1050, 2040, 2050) sont réalisées en métal.

15. Dispositif selon l'une des revendications 1 à 14, caractérisé par le fait que l'angle d'inclinaison (A) des structures de sollicitation (1020, 1030) par rapport à l'axe longitudinal commun (156) est compris entre 4 à 20°, typiquement de l'ordre de 8°.

16. Dispositif selon l'une des revendications 1 à 15, caractérisé par le fait que les structures de sollicitation (1020, 1030) sont inclinées dans la direction des surfaces d'entraînement associées (1041, 1051).

17. Dispositif selon la revendication 1, caractérisé par le fait que les structures obliques de sollicitation (2022, 1032) sont prévues sur l'élément femelle (2000).

18. Dispositif selon la revendication 17, caractérisé par le fait que l'élément femelle comprend au moins une rainure comprenant au moins un flanc oblique par rapport à l'axe longitudinal connu des deux éléments, tandis que l'élément mâle comprend au moins une nervure longitudinale dont les flancs sont parallèles audit axe longitudinal commun.

19. Dispositif selon l'une des revendications 1 à 16, caractérisé par le fait que l'encombrement (L1) de chaque nervure (1020), (1030), ayant un flanc oblique prévu sur l'élément mâle (1000), considéré en projection droite sur un plan perpendiculaire à l'axe (1049) du dispositif, est supérieur à l'ouverture correspondante (L2) de chaque rainure associée (2020, 2030), prévu sur l'élément femelle (2000) tandis que la largeur (L3) de chaque nervure considérée perpendiculairement à ses flancs est inférieure à l'ouverture (L2) de chaque rainure.

20. Dispositif selon l'une des revendications 17 ou 18, caractérisé par le fait que l'ouverture (L4) entre les deux flancs de chaque rainure (2020, 2030), prévue sur l'élément femelle (2000), considérée en projection droite sur un plan perpendiculaire à l'axe (1049) du dispositif est inférieur à la largeur correspondante (L5) de chaque nervure associée (1020, 1030), prévue sur l'élément mâle (1000) tandis que la largeur (L5) de chaque nervure est inférieure à la largeur (L6) de chaque rainure (2020, 2030), considérée perpendiculairement à ses flancs obliques.

## Claims

1. A device for coupling rotary motion, the device comprising a male first element (1000) engaged in a generally complementary female second element (2000), in which both elements (1000, 2000) include non-circular drive structures (1040, 1050, 2040, 2050) for rotation about a common longitudinal axis (156, 202) and designed to come into mutual contact in order to transmit rotary torque between said elements, at least one of the elements (1000, 2000) including a first generally longitudinal structure in relief (1020, 1030) having at least one flank that is oblique relative to the common longitudinal axis (156) of the two elements and that is designed to come to rest against a second structure in relief (2020, 2030) provided on the other element (2000), the device being characterized by the facts that the structures in relief (1020, 1030; 2020, 2030) are shaped in such a manner as to urge the drive structures (1040, 1050, 2040, 2050) respectively provided on said two elements into mutual contact, and that one of the urging structures in relief (1020, 1030; 2020, 2030) is capable of elastic deformation when the male element (1000) is inserted into the female element (2000).

2. A device according to claim 1, characterized by the fact that the first structure in relief (1020, 1030) is provided on the male first element (1000).

3. A device according to claim 1 or 2, characterized by the fact that the first structure in relief (1020, 1030) is formed by at least one generally longitudinal rib projecting from the male element (1000).

4. A device according to claim 3, characterized by the fact that the rib (1020, 1030) forming the first structure in relief posses two mutually parallel flanks (1021, 1022, 1031, 1032) that are oblique relative to the common longitudinal axis (156) of the two elements.

5. A device according to any one of claims 1 to 4, characterized by the fact that two diametrically opposite first structures (1020, 1030) are provided on one of the two elements (1000, 2000).

6. A deice according to any one of claims 1 to 5, characterized by the fact that the second structure (2020, 2030) is formed by at least one longitudinal groove in the female element (2000) and extending parallel to the common longitudinal axis of the two elements.

7. A device according to any one of claims 1 to 6, characterized by the fact that the first structure (1020, 1030) is made of plastics material.

8. A device according to claim 7, characterized by the fact that the plastics material is a 6/6 polyamide.

9. A device according to claim 7 or 8, characterized by the fact that the plastics material is overmolded on the male element (1000).

10. A device according to any one of claims 7 to 9, characterized by the fact that the male element is provided with a retaining structure (1060) receiving the overmolding of plastics material, and preferably formed as a knurled core.

11. A device according to claim 10, characterized by the fact that the male element is formed by a metal shaft receiving an overmolded body of plastics material possessing at least one rib (1020, 1030) suitable for moving relative to the shaft and constituting the first structure in relief.

12. A device according to any one of claims 1 to 11, characterized by the fact that the female element (2000) includes a blind bore (2010) provided with two pairs of grooves (2020, 2030, 2040, 2050) that are diametrically opposite in pairs.

13. A device according to any one of claims 1 to 12, characterized by the fact that the drive structures (1040, 1050) provided on the male element (1000) are formed by stamping.

14. A device according to any one of claims 1 to 13, characterized by the fact that the drive structures (1040, 1050, 2040, 2050) are made of metal.

15. A device according to any one of claims 1 to 14, characterized by the fact that the angle of inclination (A) of the urging structures (1020, 1030) relative to the common longitudinal axis (156) lies in the range 4° to 20°, and is typically about 8°.

16. A device according to any one of claims 1 to 15, characterized by the fact that the urging structures (1020, 1030) are inclined in the direction of the associated drive surfaces (1041, 1051).

17. A device according to claim 1, characterized by the fact that the oblique urging structures (2022, 2032) are provided on the female element (2000).

18. A device according to claim 17, characterized by the fact that the female element includes at least one groove having at least one flank that is oblique relative to the common longitudinal axis of the two elements, while the male element includes at least one longitudinal rib whose flanks are parallel to said common longitudinal axis.

19. A device according to any one of claims 1 to 16, characterized by the fact that the size (L1) of each rib (1020, 1030) having a sloping flank and provided on the male element (1000), measured as a right projection on a plane perpendicular to the axis (1049) of the device, is greater than the corresponding opening (L2) of each associated groove (2020, 2030) provided on the female element (2000), whereas the width (L3) of each rib as measured perpendicularly to its flanks is less than the opening (L2) of each groove.

20. A device according to claim 17 or 18, characterized by the fact that the opening (L4) between the two flanks of each groove (2020, 2030) provided on the female element (2000) and measured as a right projection on a plane perpendicular to the axis (1049) of the device is less than the corresponding width (L5) of each associated rib (1020, 1030) provided on the male element (1000), whereas the width (L5) of each rib is less than the width (L6) of each groove (2020, 2030) as measured perpendicularly to the oblique flanks thereof.

## Patentansprüche

1. Vorrichtung mit einem Drehbewegungsaufnehmer bestehend aus einem ersten männlichen Element (1000), das mit einem zweiten weiblichen, im wesentlichen komplementären Element (2000) zusammenwirkt, wobei die beiden Elemente unrunde, um eine gemeinsame Längsachse (156,202) drehende Mitnehmer (1040,1050,2040,2050) aufweisen, die zum gegenseitigen Kontaktieren ausgebildet sind, um ein Drehmoment zwischen diesen Elementen zu übertragen, wobei mindestens eines dieser Elemente (1000,2000) eine erste, im wesentlichen langgestreckte Reliefstruktur (1020,1030) aufweist, von der mindestens eine Flanke schief bezüglich der gemeinsamen Achse (156) der beiden Elemente verläuft und zum Anliegen an einer zweiten, am anderen Element (2000) vorgesehenen Reliefstruktur (2020,2030) ausgebildet ist, dadurch **gekennzeichnet**, daß die Reliefstrukturen (1020,1030,2020,2030) so ausgebildet sind, daß sie die Mitnehmer (1040,1050,2040,2050), welche jeweils an diesen beiden Elementen vorgesehen sind, in gegenseitigen Kontakt drängen und daß eine der so belasteten Reliefstrukturen (1020,1030,2020,2030) eine elastische Verformung erfahren kann, wenn das männliche Element (1000) in das weibliche Element (2000) eingeführt wird.

2. Vorrichtung nach Anspruch 1, dadurch **gekennzeichnet**, daß die erste Reliefstruktur (1020,1030) am ersten, männlichen Element (1000) angeordnet ist.

3. Vorrichtung nach Anspruch 1 oder 2, dadurch **gekennzeichnet**, daß die erste Reliefstruktur (1020,1030) von mindestens einer im wesentlichen in Längsrichtung sich erstreckenden Rippe auf dem männlichen Element (1000) gebildet ist.

4. Vorrichtung nach Anspruch 3, dadurch **gekennzeichnet**, daß die Rippe (1020,1030), welche die erste Reliefstruktur bildet, zwei zueinander parallele und bezüglich der gemeinsamen Längsachse (156) der beiden Elemente schief verlaufende Flanken (1021,1022,1031,1032) aufweist.

5. Vorrichtung nach einem der Ansprüche 1 bis 4, dadurch **gekennzeichnet**, daß zwei erste Strukturen (1020,1030) diametral gegenüberliegend an einem der beiden Elemente (1000,2000) vorgesehen sind.

6. Vorrichtung nach einem der Ansprüche 1 bis 5, dadurch **gekennzeichnet**, daß die zweite Struktur (2020,2030) von mindestens einer, zur gemeinsamen Längsachse der beiden Elemente parallelen Längsnut am weiblichen Element (2000) gebildet ist.

7. Vorrichtung nach einem der Ansprüche 1 bis 6, dadurch **gekennzeichnet**, daß die erste Struktur (1020,1030) aus Kunststoff geformt ist.

8. Vorrichtung nach Anspruch 7, dadurch **gekennzeichnet**, daß der Kunststoff eine Polyamid 6.6 ist.

9. Vorrichtung nach Anspruch 7 oder 8, dadurch **gekennzeichnet**, daß der Kunststoff an dem männlichen Element (1000) angeformt ist.

10. Vorrichtung nach einem der Ansprüche 7 bis 9, dadurch **gekennzeichnet**, daß das männliche Element mit einer Rückhaltestruktur (1060) zur Aufnahme des Kunststoffes versehen ist, die vorzugsweise von einem gerändelten Zapfen (1060) gebildet ist.

11. Vorrichtung nach Anspruch 10, dadurch **gekennzeichnet**, daß das männliche Element als metallischer Schaft ausgebildet ist, der einen angeformten Kunststoffkörper mit mindestens einer Rippe (1020,1030) aufnimmt, welche sich bezüglich des Schaftes verlagern kann und die erste Reliefstruktur bildet.

12. Vorrichtung nach einem der Ansprüche 1 bis 11, dadurch **gekennzeichnet**, daß das weibliche Element (2000) ein Sackloch (2010) mit zwei Nutenpaaren (2020,2030,2040,2050) aufweist, die paarweise diametral gegenüberliegend angeordnet sind.

13. Vorrichtung nach einem der Ansprüche 1 bis 12, dadurch **gekennzeichnet**, daß die Mitnehmer (1040,1050) am männlichen Element (1000) durch Prägen gebildet sind.

14. Vorrichtung nach einem der Ansprüche 1 bis 13, dadurch **gekennzeichnet**, daß die Mitnehmer (1040,1050,2040,2050) aus Metall bestehen.

15. Vorrichtung nach einem der Ansprüche 1 bis 14, dadurch **gekennzeichnet**, daß der Neigungswinkel (A) der in Kontakt gedrängten Reliefstrukturen (1020,1030) bezüglich der gemeinsamen Längsachse (156) zwischen 4 und 20°, insbesondere um etwa 8°, beträgt.

16. Vorrichtung nach einem der Ansprüche 1 bis 15, dadurch **gekennzeichnet**, daß die Reliefstrukturen (1020,1030) in Richtung der zugeordneten Mitnahmeflächen (1041,1051) geneigt sind.

17. Vorrichtung nach Anspruch 1, dadurch **gekennzeichnet**, daß die Reliefstrukturen (2022,2032) am weiblichen Element (2000) vorgesehen sind.

18. Vorrichtung nach Anspruch 17, dadurch **gekennzeichnet**, daß das weibliche Element mindestens eine Nut mit mindestens einer, bezüglich der gemeinsamen Längsachse der beiden Elemente schiefen Flanke aufweist, während das männliche Element mindestens eine Längsrippe aufweist, deren Flanken parallel zur gemeinsamen Längsachse verlaufen.

19. Vorrichtung nach einem der Ansprüche 1 bis 16, dadurch **gekennzeichnet**, daß die Abmessung (L1) jeder Rippe (1020,1030) mit am männlichen Element (1000) angeordneter schiefer Flanke gesehen in orthogonaler Projektion auf eine zur Achse (1049) der Vorrichtung rechtwinkligen Ebene, größer als die entsprechende Öffnungsweite (L2) jeder zugehörigen Nut (2020,2030) am weiblichen Element (2000) ist, während die Breite (L3) jeder Rippe, gesehen senkrecht zu ihren Flanken, kleiner als die Öffnungsweite (L2) jeder Nut ist.

20. Vorrichtung nach Anspruch 17 oder 18, dadurch **gekennzeichnet**, daß die Öffnungsweite (L4) zwischen den beiden Flanken jeder Nut (2020,2030) am weiblichen Element (2000), gesehen in orthogonaler Projektion auf eine Ebene senkrecht zur Achse (1049) der Vorrichtung, kleiner als die entsprechende Breite (L5) jeder zugehörigen Rippe (1020,1030) am männlichen Element (1000) ist, während die Breite (L5) jeder Rippe kleiner als die Weite (L6) jeder Nut (2020,2030), gesehen senkrecht zu ihren schiefen Flanken, ist.
